# EUROPEAN PATENT SPECIFICATION

(11) **EP 3 225 473 B1**
(45) Date of publication and mention of the grant of the patent: **07.11.2018**
(21) Application number: 17163968.5
(22) Date of filing: 30.03.2017
(51) Int. Cl.: B60T 7/20, B60T 8/24, B60T 15/20

(54) **DEVICE FOR THE CONTROL OF THE BRAKING OF A TRAILER**
VORRICHTUNG ZUR ANHÄNGERBREMSSTEUERUNG
DISPOSITIF POUR LA COMMANDE DE FREINAGE DE REMORQUE

(30) Priority: 01.04.2016 IT UA20162247
(43) Date of publication of application: 04.10.2017
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 952 398
- EP-A2- 0 319 490
- WO-A1-97/03871

## Description

The present invention relates to a device for the control of the braking of a trailer.

As is well known, towing vehicles are connected to date to their trailer by means of a connecting device which allows the respective braking systems to be put in communication with each other, in such a way that the braking of the towing vehicle operated by the operator also causes the braking of the towed trailer.

The braking system of the trailer is therefore driven by the braking system of the tractor in order to synchronize the braking forces acting on them. According to the recently introduced regulations, the connecting device between the towing vehicle and its trailer must comprise a portion connectable to the trailer and provided with a pair of female joints intended to couple to the corresponding male joints connectable to the towing vehicle.

In particular, a first female joint communicates with a control line connectable to the braking system of the trailer and a second female joint communicates with an additional line connectable to the parking and/or automatic brake of the trailer itself.

The additional line is therefore the line that allows applying the on-off braking of the trailer in the event of an emergency, or in the event of the trailer detaching from the towing vehicle.

These regulations have also modified the braking rates, reducing them in order to bring them closer to those of road vehicles.

This has, however, led to some drawbacks, the main of which is related to the agricultural vehicles manufactured in accordance with the previous regulations, i.e. having only one joint, which defines the so-called braking control line.

In particular, in the case of a trailer made in accordance with the previous regulations which is coupled to a newly constructed towing vehicle, the pressure sent to the trailer to command the brakes is lower than the braking pressure of the towing vehicle, resulting in the trailer not braking properly and thus exerting a thrust action on the tractor.

The main aim of the present invention is to provide a device for the control of the braking of a trailer that allows adjusting the braking rate depending on the type of trailer.

EP 2 952 398 A1 discloses a valve assembly for trailers comprising a first female coupling that is communicated with a control line of the braking system of the trailer and a second female coupling is communicated with an additional line that acts on the parking.

Within this aim, one object of the present invention is therefore to provide a device that is flexible to use, i.e. that can be used on any type of trailer. Another object of the present invention is to provide a device for the control of the braking of a trailer which allows to overcome the aforementioned drawbacks of the prior art within a simple, rational, easy and effective to use as well as affordable solution.

The objects outlined above are achieved by the present device for the braking of a trailer according to claim 1.

Other characteristics and advantages of the present invention will become more evident from the description of a preferred, but not exclusive, embodiment of a braking device for a trailer, illustrated by way of an indicative but non-limiting example, in the enclosed drawings in which:
Figure 1 is a sectional view of a device according to the invention according to a first embodiment and with the locking element in the release position;
Figure 2 is a sectional view of the device of Figure 1 according to the IIa-IIa and IIb-IIb planes;
Figure 3 is an enlargement of a detail of the device of Figure 1;
Figure 4 is a sectional view of the device of Figure 1 with the locking element in the position of interference;
Figure 5 is a sectional view of the device of Figure 4 according to the Va-Va and Vb-Vb planes;
Figure 6 is an enlargement of a detail of the device of Figure 4;
Figure 7 is a sectional view of a device according to the invention in a second embodiment and with the locking element in the release position;
Figure 8 is a sectional view of the device of Figure 7 with the locking element in the position of interference;
Figure 9 is a sectional view of a device according to the invention in a third embodiment and with the locking element in the release position;
Figure 10 is a sectional view of the device of Figure 9 with the locking element in the position of interference;
Figure 11 is a sectional view of a device according to the invention in a fourth embodiment and with the locking element in the release position;
Figure 12 is a sectional view of the device of Figure 11 with the locking element in the position of interference;
Figure 13 is a sectional view of a device according to the invention in a fifth embodiment and with the locking element in the release position;
Figure 14 is a sectional view of the device of Figure 13 with the locking element in the position of interference.

With particular reference to these figures, reference numeral 1 globally indicates a braking device for a trailer.

The device 1 comprises a first male joint 2 and a second male joint 3 associable with a towing vehicle and intended to be connected, due to the insertion into the relative female joints (not shown in the figures), to the braking system and to the automatic and/or parking brake of the trailer, respectively.

Both the first and the second male joints 2 and 3 are provided with first and second valve means 2a and 3a respectively, which are movable between an open position, in which they allow the passage of a work fluid through the relative joint, and a closed position, in which they prevent the passage of the work fluid.

The device 1 also comprises a brake-trailer valve 4 which, in turn, comprises a body 5 in which is formed at least a seat 6 communicating with a supply port 7, connectable to a source of the work fluid at a first pressure (e.g., a pump), an additional port 8, connectable to a source of the work fluid at a second pressure and communicating with the second male joint 3, and at least a discharge port 9 of the work fluid. Inside the seat 6 is housed in a sliding manner a distributor 10, which is able to put the first male joint 2 in communication with the supply port 7 or with the discharge port 9 depending on the braking conditions. In the event of the braking pressure of the trailer reaching a balance value, the distributor 10 is adapted to close the connection between the first male joint 2 and the ports 7 and 9.

Suitably, the seat 6 also has a further port 25, which is put in communication with the supply port 7 by the distributor 10 to discharge the amount of work fluid exceeding the one required for braking the trailer.

More particularly, the additional port 8 is connectable to a pressure control device (not shown in the figures), which is adapted to maintain substantially constant the pressure of the work fluid sent to the second male joint 3 to maintain the automatic and/or parking brake of the trailer deactivated when running and to reset the work fluid pressure, in order to activate the automatic and/or parking brake of the trailer in emergency conditions or as a result of the activation of the parking and emergency brake of the towing vehicle.

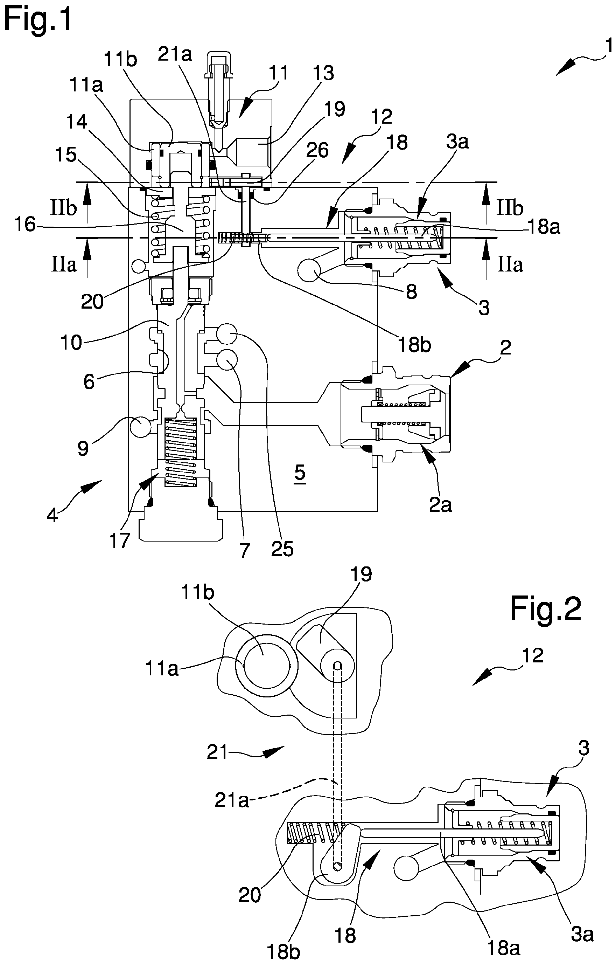

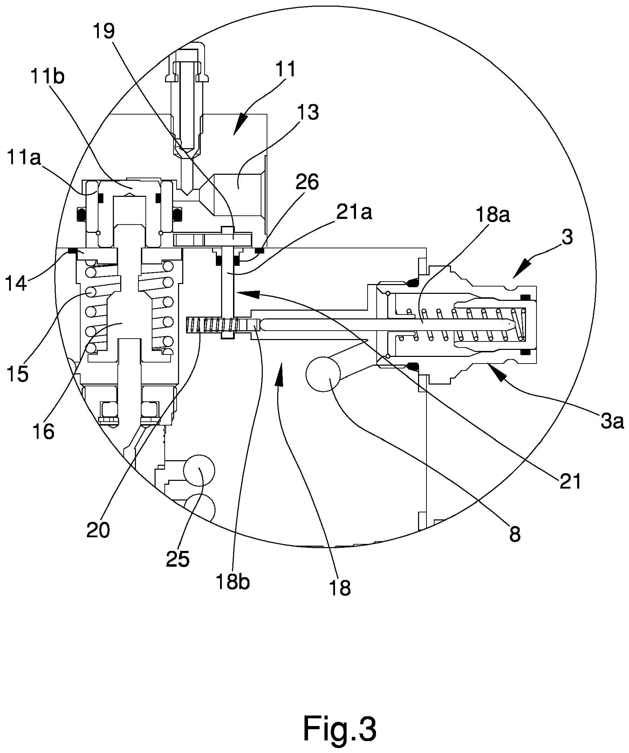

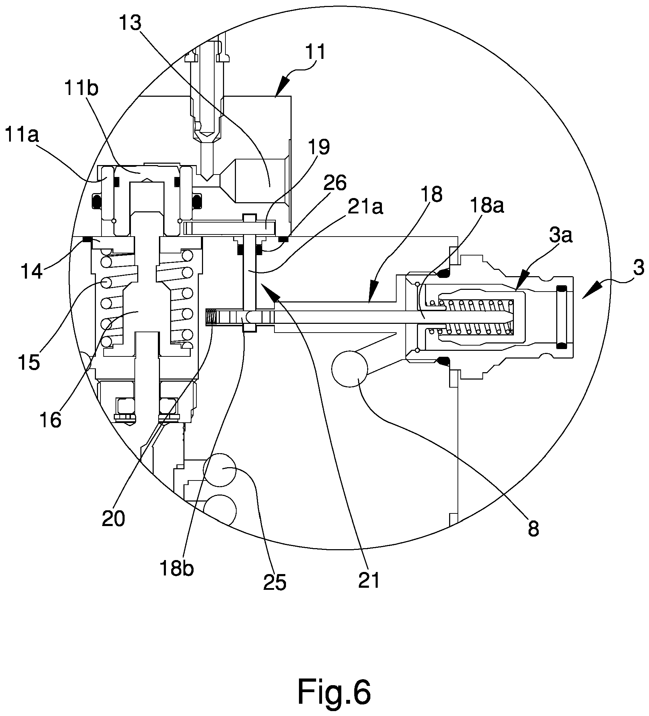

In the embodiment of Figures 1 to 6, the brake-trailer valve 4 is directly associated with the male joints 2 and 3, that is the latter are directly associated with the body 5 in which the seat 6 is formed.

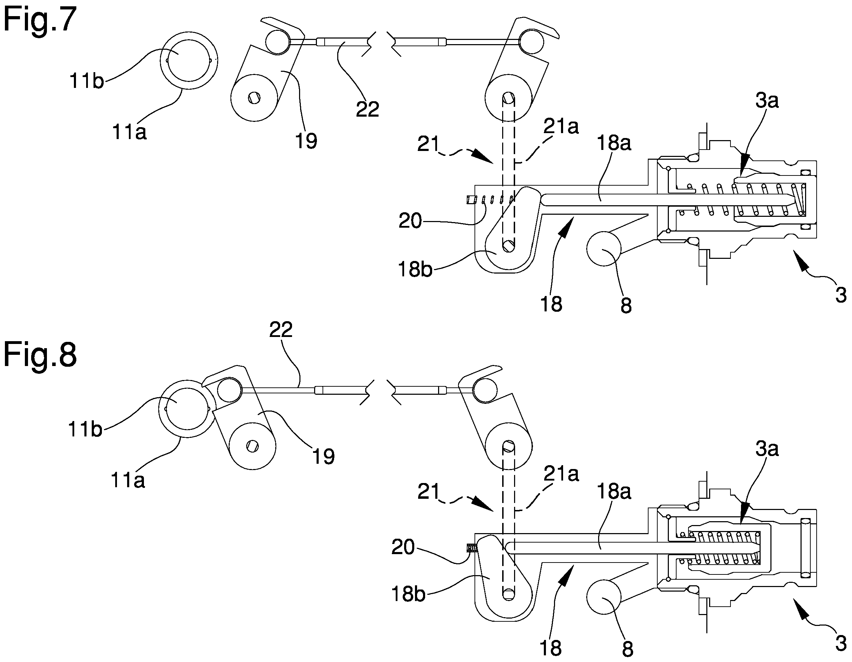

In the embodiments of Figures 7 to 14, the brake-trailer valve 4 is separate from the male joints 2 and 3, which are hydraulically connected to the seat 6.

The device 1 further comprises piloting means 11 of the distributor element 10, which are connectable to the braking system of the towing vehicle.

According to the invention, the piloting means 11 comprise at least a first and a second piloting element, identified in the figures with reference numerals 11a and 11b, adapted to interact with the distributor 10.

Also according to the invention, the device 1 further comprises control means 12 operable by the second valve means 3a and operatively connected to one of the piloting elements 11a, 11b. The control means 12 are adapted to allow the displacement of both piloting elements 11a and 11b when the second valve means 3a are in the closed position and to lock the displacement of one of them when the second valve means 3a are in the open position.

Therefore, when the second male joint 3 is coupled to its female joint (in the case of a double-line trailer) and the second valve means 3a are in the open position, on the distributor 10 operates only one of the piloting elements, the 11b, so the device 1 will be characterized by a first braking rate.

On the contrary, in the event of the trailer (manufactured according to the pre-existing regulations) having only one female joint for the braking control, this is coupled, during use, to the first male joint 2; the second valve means 3a remain in the closed position. In this operating condition, therefore, both piloting elements 11a and 11b are free to move and interact with the distributor 10, whereby the device 1 has a second braking rate which is different to the first braking rate mentioned above.

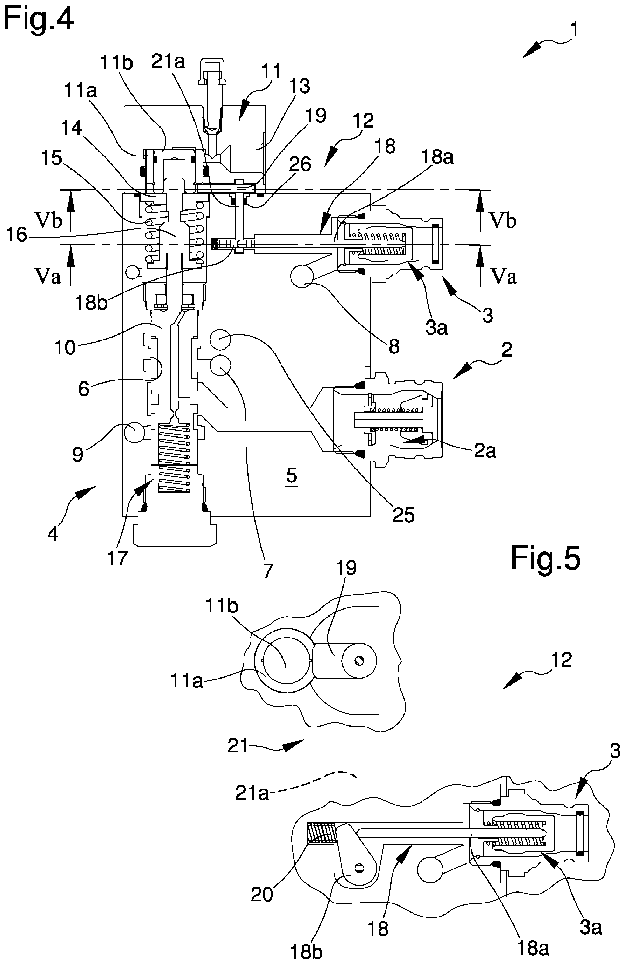

The first and the second piloting elements 11a and 11b may be arranged coaxially with each other, as shown in the embodiments in Figures 1 and 4, where the first piloting element 11a is fitted externally to the second piloting element 11b. In this case, therefore, the first piloting element 11a has a larger diameter than the second piloting element 11b.

In an alternative embodiment, not shown in the figures, the first and second piloting elements 11a and 11b may be arranged mutually parallel.

The piloting elements 11a and 11b are put in communication with a piloting channel 13, connectable to the braking system of the towing vehicle, and are adapted to rest against a plate 14, which interacts with the distributor 10 by means of elastic means 15 which are interposed between the plate itself and a thrust element 16 which is locked together with the distributor 10.

The elastic means 15 are thus adapted to exert a predefined force on the distributor 10 as a result of the increase in pressure in the piloting channel 13 and, therefore, of the displacement of the piloting elements 11a, 11b.

On the opposite side of the piloting means 11, with respect to the distributor 10, are provided counteracting means 17 adapted to exert a predefined force on the distributor itself as a result of the increase in pressure in the piloting channel 13 and, therefore, of the displacement of the piloting elements 11a, 11b. The distributor 10 has a reaction surface communicating with the first male joint 2 and which acts in the opposite direction to the piloting means 11; the ratio between the reaction surface and the surfaces of the piloting means 11a and 11b determines the piloting ratio of the device 1.

Advantageously, the control means 12 comprise command means 18 mechanically connected to the second valve means 3a and at least a locking element 19 operatively connected to the command means 18 and adapted to interact with one of the piloting elements 11a, 11b.

More in detail, the command means 18 are movable between a home configuration, which corresponds to the closed position of the second valve means 3a and in which the locking element 19 is disengaged from the piloting elements 11a and 11b, and an active configuration, which corresponds to the open position of the second valve means 3a and in which the locking element 19 interacts with one of the piloting elements 11a, 11b to lock the displacement thereof. Therefore, the locking element 19 is displaced from a release position, wherein it disengages from the piloting elements 11a and 11b, to a position of interference, wherein it engages with one of the piloting elements 11a, 11b due to the displacement of the command means 18 from the home configuration to the active configuration and vice versa. In the release position of the locking element 19, both piloting elements 11a and 11b are therefore free to move, while in the position of interference only one of them is free to move, the other being locked.

In the embodiment shown in the figures, the locking element 19 is adapted to interact with the first piloting element 11a, that is, with the outermost piloting element.

Preferably, the command means 18 comprise at least a rod element 18a, housed at least partly inside the second male joint 3 and movable in translational movement due to the displacement of the second valve means 3a.

In a particular embodiment, not shown in the figures, the rod element 18a coincides with the locking element 19 and is therefore adapted to interact directly with one of the piloting elements 11a, 11b.

In the embodiments of Figures 1 to 10 and 13, 14, the command means 18 also comprise at least a cam element 18b, kinematically connected to the rod element 18a and operatively connected to the locking element 19. More particularly, due to the displacement of the second valve means 3a from the closed position to the open position, the cam element 18b rotates around a relative axis counteracting the elastic means 20.

Suitably, the control means 12 comprise connecting means 21 for connecting the command means 18 to the locking element 19. The connecting means 21 are therefore adapted to transfer the displacement of the cam element 18b to the locking element 19, so as to bring it to the position of interference following the opening of the second valve means 3a.

In the embodiments shown in Figures 1 to 8, the connecting means 21 are of the mechanical type and comprise at least one shaft 21a.

In particular, in the embodiment of Figures 1 to 6, the shaft 21a is associated with a cam element 18b on one side and with the locking element 19 on the opposite side. The cam element 18b, therefore, by rotating around the relative axis due to the opening of the second valve means 3a, causes the shaft 21a to displace, which makes the locking element 19 rotate which in turn is hinged around a relative axis.

Since the shaft 21a is adapted to transfer the motion from a pressurized area to a non-pressurized area, sealing means 26 are provided thereon.

In the embodiment of Figures 7 and 8, the connecting means 21 are also of a mechanical type and also comprise, in addition to the shaft 21a associated with the cam element 18b, a flexible cable 22 associated on one side with the shaft 21a and on the opposite side with the locking element 19. As a result of the rotation of the cam element 18b due to the opening of the second valve means 3a, and of the consequent displacement of the shaft 21a, the flexible cable 22 is pulled so as to cause the displacement of the locking element 19 from the release position to the position of interference.

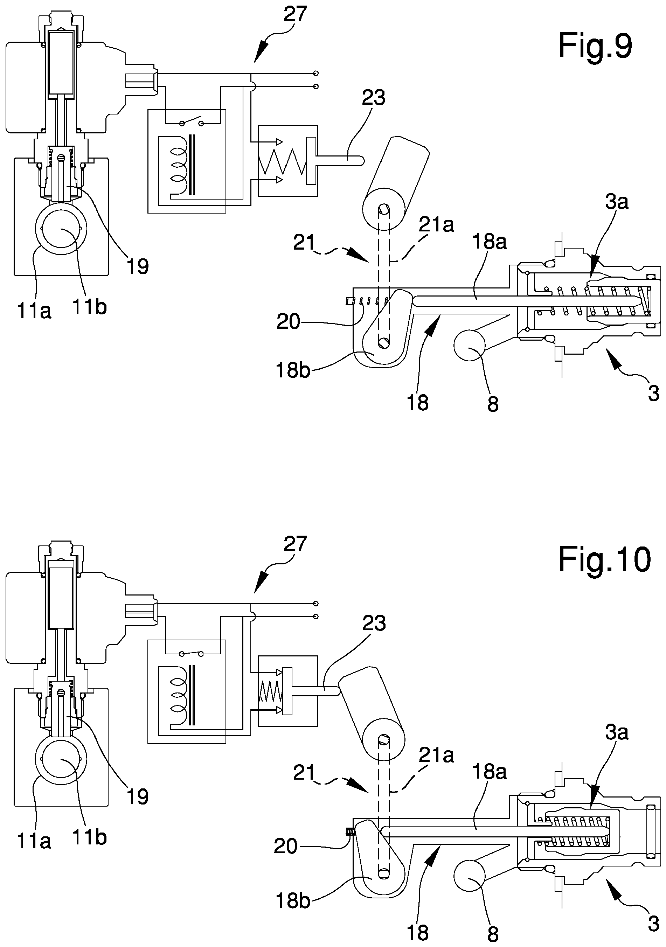

In the embodiments shown in Figures 9 to 14, the connecting means 21 are of the electric type.

In the embodiment of Figures 9 and 10, the connecting means 21 comprise at least an ON-OFF switch, identified by reference numeral 23, which is operatively connected to the locking element 19 by means of an electric circuit 27 and is adapted to be activated by the command means 18. More specifically, when the command means 18 reach the active configuration as a result of the opening of the second valve means 3a, due to the rotation of the cam element 18b, they close the electric circuit 27 by means of the switch 23, so as to bring the locking element 19 to the position of interference.

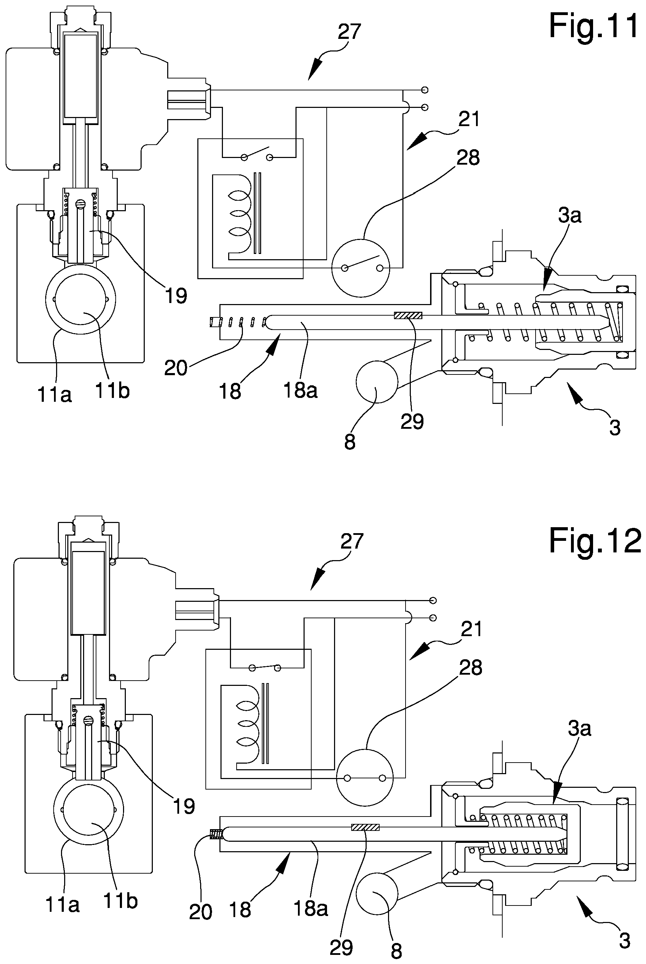

In the fourth embodiment shown in the Figures 11 and 12, the connecting means 21 comprise at least a switch of the REED type, identified by reference numeral 28, which is operatively connected to the locking element 19 by means of an electric circuit 27 and the command means 18 comprise at least a magnetic element 29 adapted to interact with the switch 28. More particularly, when the command means 18 reach the active configuration as a result of the opening of the second valve means 3a, due to the magnetic field generated by the magnetic element 29, associated with the rod element 18a, the electric circuit 27 is closed by means of the switch 28, so as to bring said locking element 19 to the position of interference. In this embodiment, the second male joint 3 is made of a material permeable to the magnetic field, e.g. aluminum.

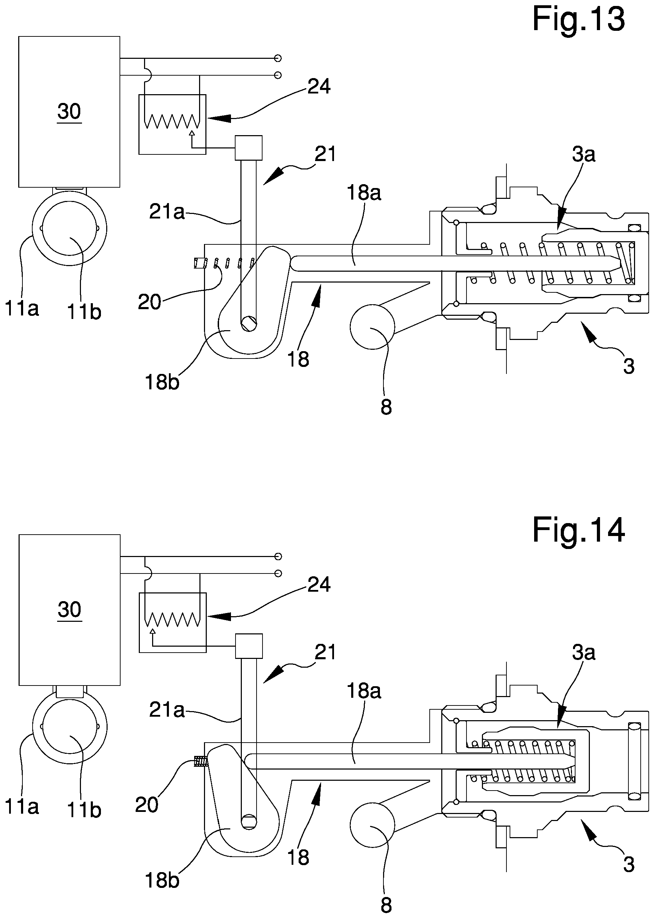

In the embodiment shown in Figures 13 and 14, on the other hand, the connecting means 21 comprise a potentiometer 24, operatively connected to the locking element 19, e.g. by means of an electric control unit 30, and adapted to be activated by the command means 18 as a result of the reach of their active configuration to bring the locking element itself to the position of interference. More particularly, as a result of the rotation of the cam element 18b due to the opening of the second valve means 3a, the shaft 21a interacts with the potentiometer 24 which causes the flow of the current into the control unit 30 and the consequent displacement of the locking element 19. The command means 18 can interact with the potentiometer 24 mechanically, as in the embodiment shown in the figures, or by means of a switch of the type described above.

The operation of the present invention is as follows.

In the event of both male joints 2 and 3 being coupled to the corresponding female joints, i.e. when the trailer to be towed has been recently manufactured, both valve means 2a and 3a are brought from the closed position to the open position.

Due to the displacement of the second valve means 3a to the open position, the command means 18 are brought to the active configuration.

More particularly, the rod element 18a is pushed towards the cam element 18b, which rotates counteracting the elastic means 20 thus causing, by means of the connecting means 21, the displacement of the locking element 19 from the release position towards the position of interference.

It follows, therefore, that the piloting means 11 act on the distributor 10 with only the second piloting element 11b.

In the event, on the other hand, of the trailer to be towed being provided with only one female joint, this is coupled to the first male joint 2 of the device 1. The second male joint 3 therefore remains decoupled and the relative second valve means 3a remain in the closed position.

It follows, therefore, that in this case the command means 18 maintain their home configuration, so the locking element 19 remains in the release position and both piloting elements 11a, 11b are free to move and interact with the distributor 10.

It has in practice been found that the described invention achieves the intended objects and in particular the fact is emphasized that the device according to the present invention allows, by intervening on the piloting elements, to vary the braking rate depending on the type of trailer.

In particular, the device according to the invention allows intervening on the distributor of the brake-trailer valve with two piloting elements in the event of the trailer being provided with only one female joint, while allows intervening on the distributor with just one piloting element, thus exerting a lower thrust than in the previous case, if both male joints are engaged.

## Claims

1. Device (1) for the control of the braking of a trailer, comprising:
- a first male joint (2) connectable to the braking system of a trailer, there being provided first valve means (2a) which can be moved between an open position and a closed position to allow and prevent, respectively, the passage of a work fluid through the first joint itself;
- a second male joint (3) connectable to the automatic and/or parking brake of the trailer, there being provided second valve means (3a) which can be moved between an open position and a closed position, to allow and prevent, respectively, the passage of a work fluid through the second joint itself;
- a brake-trailer valve (4) comprising a body (5) wherein is formed at least a seat (6) communicating with a supply port (7) connectable to a source of a work fluid at a first pressure, an additional port (8) communicating with a source of a work fluid at a second pressure and with said second male joint (3) and at least a discharge port (9) of the work fluid;
- at least a distributor (10) housed in a sliding manner inside said seat (6) and movable at least to put said first male joint (2) in communication with said supply port (7) or with said discharge port (9);
- piloting means (11) of said distributor (10) which are connectable to the braking system of a towed vehicle;
**characterized in that** said piloting means (11) comprise at least a first and a second piloting element (11a, 11b) adapted to interact with said distributor (10) and **in that** it comprises control means (12) operable by said second valve means (3a) and operatively connected to one of said piloting elements (11a, 11b), wherein said control means (12) are adapted to allow the displacement of both the piloting elements (11a, 11b) with said second valve means (3a) in closed position and to lock the displacement of one of said piloting elements (11a, 11b) with said second valve means (3a) in open position.

2. Device (1) according to claim 1, **characterized in that** said control means (12) comprise command means (18), mechanically operable by said second valve means (3a), and at least a locking element (19) operatively connected to said command means (18) and adapted to interact with one of said piloting elements (11a, 11b), wherein said command means (18) are adapted to move said locking element (19), due to the displacement of said second valve means (3a) from the closed position to the open position, from a release position, wherein it is disengaged from said piloting elements (11a, 11b), to a position of interference, wherein it engages with one of said piloting elements (11a, 11b) to prevent it from displacing, and vice versa.

3. Device (1) according to claim 2, **characterized in that** said command means (18) comprise at least a rod element (18a) movable in translational movement due to the displacement of said second valve means (3a) and operatively connected to said locking element (19).

4. Device (1) according to claim 3, **characterized in that** said command means (18) comprise at least a cam element (18b) kinematically connected to said rod element (18a) and operatively connected to said locking element (19).

5. Device (1) according to claim 3, **characterized in that** said rod element (18a) coincides with said locking element (19) and is adapted to interact directly with one of said piloting elements (11a, 11b).

6. Device (1) according to one or more of claims 2 to 4, **characterized in that** said control means (12) comprise connecting means (21) adapted to transfer the motion from said command means (18) to said locking element (19).

7. Device (1) according to claim 6, **characterized in that** said connecting means (21) are of the mechanical type.

8. Device (1) according to claim 7, **characterized in that** said connecting means (21) comprise at least a shaft (21a) kinematically connected to said cam element (18b) and to said locking element (19).

9. Device (1) according to claim 8, **characterized in that** said connecting means (21) comprise at least a flexible cable (22) associated on one side with said shaft (21a) and on the opposite side with said locking element (19).

10. Device (1) according to claim 6, **characterized in that** said connecting means (21) are of the electric type.

11. Device (1) according to claim 10, **characterized in that** said connecting means (21) comprise an ON-OFF type switch (23) which can be activated by said command means (18) when the second valve means (3a) reach the open position to bring said locking element (19) to a position of interference.

12. Device (1) according to claim 10, **characterized in that** said connecting means (21) comprise a REED type switch (28) and **in that** said command means (18) comprise at least a magnetic element (29) adapted to interact with said REED type switch (28), said command means (18) being adapted to activate said REED type switch (28) when the second valve means (3a) reach the open position to bring said locking element (19) to a position of interference.

13. Device (1) according to claim 10, **characterized in that** said connecting means (21) comprise at least a potentiometer (24) which can be activated when the second valve means (3a) reach the open position to bring said locking element (19) to a position of interference.

14. Device (1) according to one or more of the preceding claims, **characterized in that** said first piloting element (11a) is fitted externally to said second piloting element (11b) and **in that** said control means (12) are adapted to lock said first piloting element (11a) with said second valve means (3a) in the open position.

15. Device (1) according to one or more of claims 1 to 13, **characterized in that** said first and second piloting elements (11a, 11b) are arranged mutually parallel and **in that** said control means (12) are adapted to lock one of said piloting elements (11a, 11b) with said second valve means (3a) in the open position.

## Patentansprüche

1. Vorrichtung (1) zur Steuerung des Bremsens eines Anhängers, umfassend:
- ein erstes männliches Verbindungsstück (2), das mit dem Bremssystem eines Anhängers verbunden werden kann, wobei erste Ventilmittel (2a) bereitgestellt sind, die zwischen einer offenen Position und einer geschlossenen Position bewegt werden können, um jeweils die Passage eines Arbeitsfluids durch das erste Verbindungsstück selbst zu gestatten und zu verhindern;
- ein zweites männliches Verbindungsstück (3), das mit der automatischen und/oder Parkbremse des Anhängers verbunden werden kann, wobei zweite Ventilmittel (3a) bereitgestellt sind, die zwischen einer offenen Position und einer geschlossenen Position bewegt werden können, um jeweils die Passage eines Arbeitsfluids durch das zweite Verbindungsstück selbst zu gestatten und zu verhindern;
- ein Anhängerbremsventil (4), umfassend einen Körper (5), in dem mindestens ein Sitz (6) gebildet ist, der mit einer Zufuhröffnung (7) kommuniziert, die mit einer Quelle eines Arbeitsfluids bei einem ersten Druck verbunden werden kann, wobei eine zusätzliche Öffnung (8) mit einer Quelle eines Arbeitsfluids bei einem zweiten Druck und mit dem zweiten männlichen Verbindungsstück (3) und mindestens einer Auslassöffnung (9) des Arbeitsfluids kommuniziert;
- mindestens einen Verteiler (10), der verschiebbar innerhalb des Sitzes (6) aufgenommen ist und bewegbar ist, um mindestens das erste männliche Verbindungsstück (2) mit der Zufuhröffnung (7) oder mit der Auslassöffnung (9) in Kommunikation zu setzen;
- Pilotiermittel (11) des Verteilers (10), die mit dem Bremssystem eines gezogenen Fahrzeugs verbunden werden können;
**dadurch gekennzeichnet, dass** die Pilotiermittel (11) mindestens ein erstes und ein zweites Pilotierelement (11a, 11b) umfassen, die geeignet sind, um mit dem Verteiler (10) zu interagieren, und dadurch, dass sie Steuermittel (12) umfassen, die von den zweiten Ventilmitteln (3a) betreibbar sind und wirksam mit einem der Pilotierelemente (11a, 11b) verbunden sind, wobei die Steuermittel (12) geeignet sind, um die Verschiebung beider Pilotierelemente (11a, 11b) mit den zweiten Ventilmitteln (3a) in der geschlossenen Position zu gestatten, und die Verschiebung eines der Pilotierelemente (11a, 11b) mit den zweiten Ventilmitteln (3a) in der offenen Position zu verriegeln.

2. Vorrichtung (1) nach Anspruch 1, **dadurch gekennzeichnet, dass** die Steuermittel (12) Befehlsmittel (18) umfassen, die mechanisch von den zweiten Ventilmitteln (3a) betreibbar sind, und mindestens ein Verriegelungselement (19), das betreibbar mit den Befehlsmitteln (18) verbunden ist, und geeignet ist, um mit einem der Pilotierelemente (11a, 11b) zu interagieren, wobei die Befehlsmittel (18) geeignet sind, um das Verriegelungselement (19), aufgrund der Verschiebung der zweiten Ventilmittel (3a) aus der geschlossenen Position in die offene Position, aus einer Freigabeposition, in der es von den Pilotierelementen (11a, 11b) gelöst ist, in eine Interferenzposition, in der es mit einem der Pilotierelemente (11a, 11b) in Eingriff steht, um seine Verschiebung zu verhindern, und umgekehrt, zu bewegen.

3. Vorrichtung (1) nach Anspruch 2, **dadurch gekennzeichnet, dass** die Befehlsmittel (18) mindestens ein Stangenelement (18a) umfassen, das in einer translatorischen Bewegung aufgrund der Verschiebung der zweiten Ventilmittel (3a) bewegbar ist und wirksam mit dem Verriegelungselement (19) verbunden ist.

4. Vorrichtung (1) nach Anspruch 3, **dadurch gekennzeichnet, dass** die Befehlsmittel (18) mindestens ein Nockenelement (18b) umfassen, das kinematisch mit dem Stangenelement (18a) verbunden ist und wirksam mit dem Verriegelungselement (19) verbunden ist.

5. Vorrichtung (1) nach Anspruch 3, **dadurch gekennzeichnet, dass** das Stangenelement (18a) mit dem Verriegelungselement (19) zusammenfällt und geeignet ist, um direkt mit einem der Pilotierelemente (11a, 11b) zu interagieren.

6. Vorrichtung (1) nach einem oder mehreren der Ansprüche 2 bis 4, **dadurch gekennzeichnet, dass** die Steuermittel (12) Verbindungsmittel (21) umfassen, die geeignet sind, um die Bewegung von den Befehlsmitteln (18) auf das Verriegelungselement (19) zu übertragen.

7. Vorrichtung (1) nach Anspruch 6, **dadurch gekennzeichnet, dass** die Verbindungsmittel (21) vom mechanischen Typ sind.

8. Vorrichtung (1) nach Anspruch 7, **dadurch gekennzeichnet, dass** die Verbindungsmittel (21) mindestens eine Welle (21a) umfassen, die kinematisch mit dem Nockenelement (18b) und mit dem Verriegelungselement (19) verbunden ist.

9. Vorrichtung (1) nach Anspruch 8, **dadurch gekennzeichnet, dass** die Verbindungsmittel (21) mindestens ein flexibles Kabel (22) umfassen, das auf einer Seite mit der Welle (21a) und auf der gegenüberliegenden Seite mit dem Verriegelungselement (19) verbunden ist.

10. Vorrichtung (1) nach Anspruch 6, **dadurch gekennzeichnet, dass** die Verbindungsmittel (21) vom elektrischen Typ sind.

11. Vorrichtung (1) nach Anspruch 10, **dadurch gekennzeichnet, dass** die Verbindungsmittel (21) einen Schalter (23) vom EIN-AUS-Typ umfassen, der von den Befehlsmitteln (18) aktiviert werden kann, wenn die zweiten Ventilmittel (3a) die offene Position erreichen, um das Verriegelungselement (19) in eine Interferenzposition zu bringen.

12. Vorrichtung (1) nach Anspruch 10, **dadurch gekennzeichnet, dass** die Verbindungsmittel (21) einen Schalter (28) vom REED-Typ umfassen, und dadurch, dass die Befehlsmittel (18) mindestens ein Magnetelement (29) umfassen, das geeignet ist, um mit dem Schalter (28) vom REED-Typ zu interagieren, wobei die Befehlsmittel (18) geeignet sind, um den Schalter (28) vom REED-Typ zu aktivieren, wenn die zweiten Ventilmittel (3a) die offene Position erreichen, um das Verriegelungselement (19) in eine Interferenzposition zu bringen.

13. Vorrichtung (1) nach Anspruch 10, **dadurch gekennzeichnet, dass** die Verbindungsmittel (21) mindestens ein Potentiometer (24) umfassen, das aktiviert werden kann, wenn die zweiten Ventilmittel (3a) die offene Position erreichen, um das Verriegelungselement (19) in eine Interferenzposition zu bringen.

14. Vorrichtung (1) nach einem oder mehreren der vorhergehenden Ansprüche, **dadurch gekennzeichnet, dass** das erste Pilotierelement (11a) extern an das zweite Pilotierelement (11b) gepasst ist, und dadurch, dass die Steuermittel (12) geeignet sind, um das erste Pilotierelement (11a) mit den zweiten Ventilmitteln (3a) in der offenen Position zu verriegeln.

15. Vorrichtung (1) nach einem oder mehreren der Ansprüche 1 bis 13, **dadurch gekennzeichnet, dass** das erste und zweite Pilotierelement (11a, 11b) zueinander parallel angeordnet sind, und dadurch, dass die Steuermittel (12) geeignet sind, um eines der Pilotierelemente (11a, 11b) mit den zweiten Ventilmitteln (3a) in der offenen Position zu verriegeln.

## Revendications

1. Dispositif (1) pour la commande du freinage d'une remorque, comprenant :
- un premier joint mâle (2) pouvant être raccordé au système de freinage d'une remorque, étant prévus des premiers moyens de soupape (2a) qui peuvent être mus entre une position ouverte et une position fermée pour permettre et empêcher, respectivement, le passage d'un fluide de travail à travers le premier joint lui-même ;
- un second joint mâle (3) pouvant être raccordé au frein automatique et/ou de stationnement de la remorque, étant prévus des seconds moyens de soupape (3a) qui peuvent être déplacés entre une position ouverte et une position fermée, pour permettre et empêcher, respectivement, le passage d'un fluide de travail à travers le second joint lui-même ;
- une soupape de frein-remorque (4) comprenant un corps (5) dans lequel est formée au moins une assise (6) communiquant avec un orifice d'alimentation (7) pouvant être raccordé à une source d'un fluide de travail à une première pression, un orifice supplémentaire (8) communiquant avec une source d'un fluide de travail à une seconde pression et avec ledit second joint mâle (3) et au moins un orifice d'évacuation (9) du fluide de travail ;
- au moins un distributeur (10) logé de manière coulissante à l'intérieur de ladite assise (6) et mobile au moins pour mettre ledit premier joint mâle (2) en communication avec ledit orifice d'alimentation (7) ou avec ledit orifice d'évacuation (9) ;
- des moyens de pilotage (11) dudit distributeur (10) qui peuvent être raccordés au système de freinage d'un véhicule tracté ;
**caractérisé en ce que** lesdits moyens de pilotage (11) comprennent au moins un premier et un second élément de pilotage (11a, 11b) adaptés pour interagir avec ledit distributeur (10) et **en ce qu'**il comprend des moyens de commande (12) opérationnels par lesdits seconds moyens de soupape (3a) et raccordés opérationnellement à l'un desdits éléments de pilotage (11a, 11b), dans lequel lesdits moyens de commande (12) sont adaptés pour permettre le déplacement des deux éléments de pilotage (11a, 11b) avec lesdits seconds moyens de soupape (3a) en position fermée et pour verrouiller le déplacement de l'un desdits éléments de pilotage (11a, 11b) avec lesdits seconds moyens de soupape (3a) en position ouverte.

2. Dispositif (1) selon la revendication 1, **caractérisé en ce que** lesdits moyens de commande (12) comprennent des moyens d'ordre (18), opérationnels mécaniquement par lesdits seconds moyens de soupape (3a), et au moins un élément de verrouillage (19) raccordé opérationnellement auxdits moyens d'ordre (18) et adapté pour interagir avec l'un desdits éléments de pilotage (11a, 11b), dans lequel lesdits moyens d'ordre (18) sont adaptés pour mouvoir ledit élément de verrouillage (19), en raison du déplacement desdits seconds moyens de soupape (3a) de la position fermée à la position ouverte, d'une position de libération, dans laquelle il est désenclenché desdits éléments de pilotage (11a, 11b), à une position d'interférence, dans laquelle il s'enclenche avec l'un desdits éléments de pilotage (11a, 11b) pour l'empêcher de se déplacer, et vice versa.

3. Dispositif (1) selon la revendication 2, **caractérisé en ce que** lesdits moyens d'ordre (18) comprennent au moins un élément de tige (18a) mobile en mouvement de translation en raison du déplacement desdits seconds moyens de soupape (3a) et raccordé opérationnellement audit élément de verrouillage (19).

4. Dispositif (1) selon la revendication 3, **caractérisé en ce que** lesdits moyens d'ordre (18) comprennent au moins un élément de came (18b) raccordé cinématiquement audit élément de tige (18a) et raccordé opérationnellement audit élément de verrouillage (19).

5. Dispositif (1) selon la revendication 3, **caractérisé en ce que** ledit élément de tige (18a) coïncide avec ledit élément de verrouillage (19) et est adapté pour interagir directement avec l'un desdits éléments de pilotage (11a, 11b).

6. Dispositif (1) selon une ou plusieurs des revendications 2 à 4, **caractérisé en ce que** lesdits moyens de commande (12) comprennent des moyens de raccordement (21) adaptés pour transférer le mouvement desdits moyens d'ordre (18) audit élément de verrouillage (19).

7. Dispositif (1) selon la revendication 6, **caractérisé en ce que** lesdits moyens de raccordement (21) sont du type mécanique.

8. Dispositif (1) selon la revendication 7, **caractérisé en ce que** lesdits moyens de raccordement (21) comprennent au moins un arbre (21a) raccordé cinématiquement audit élément de came (18b) et audit élément de verrouillage (19).

9. Dispositif (1) selon la revendication 8, **caractérisé en ce que** lesdits moyens de raccordement (21) comprennent au moins un câble flexible (22) associé sur un côté audit arbre (21a) et sur le côté opposé audit élément de verrouillage (19).

10. Dispositif (1) selon la revendication 6, **caractérisé en ce que** lesdits moyens de raccordement (21) sont du type électrique.

11. Dispositif (1) selon la revendication 10, **caractérisé en ce que** lesdits moyens de raccordement (21) comprennent un commutateur de type MARCHE-ARRET (23) qui peut être activé par lesdits moyens d'ordre (18) lorsque les seconds moyens de soupape (3a) atteignent la position ouverte pour amener ledit élément de verrouillage (19) à une position d'interférence.

12. Dispositif (1) selon la revendication 10, **caractérisé en ce que** lesdits moyens de raccordement (21) comprennent un commutateur de type à LAMES (28) et **en ce que** lesdits moyens d'ordre (18) comprennent au moins un élément magnétique (29) adapté pour interagir avec ledit commutateur de type à LAMES (28), lesdits moyens d'ordre (18) étant adaptés pour activer ledit commutateur de type à LAMES (28) lorsque les seconds moyens de soupape (3a) atteignent la position ouverte pour amener ledit élément de verrouillage (19) à une position d'interférence.

13. Dispositif (1) selon la revendication 10, **caractérisé en ce que** lesdits moyens de raccordement (21) comprennent au moins un potentiomètre (24) qui peut être activé lorsque les seconds moyens de soupape (3a) atteignent la position ouverte pour amener ledit élément de verrouillage (19) à une position d'interférence.

14. Dispositif (1) selon une ou plusieurs des revendications précédentes, **caractérisé en ce que** ledit premier élément de pilotage (11a) est installé à l'extérieur dudit second élément de pilotage (11b) et **en ce que** lesdits moyens de commande (12) sont adaptés pour verrouiller ledit premier élément de pilotage (11a) avec lesdits seconds moyens de soupape (3a) dans la position ouverte.

15. Dispositif (1) selon une ou plusieurs des revendications 1 à 13, **caractérisé en ce que** lesdits premier et second éléments de pilotage (11a, 11b) sont agencés mutuellement parallèles et **en ce que** lesdits moyens de commande (12) sont adaptés pour verrouiller l'un desdits éléments de pilotage (11a, 11b) avec lesdits seconds moyens de soupape (3a) dans la position ouverte.
